# EUROPÄISCHE PATENTANMELDUNG

(11) **EP 4 250 689 A1**
(43) Veröffentlichungstag der Anmeldung: **27.09.2023**
(21) Anmeldenummer: 23160780.5
(22) Anmeldetag: 08.03.2023
(51) Int. Cl.: H04L 67/12, G08G 1/0967, G08G 1/0968

(54) **SYSTEM UND VERFAHREN ZUM ÜBERMITTELN VON DATEN MITTELS DATENPAKETEN**

(30) Priorität: 22.03.2022 DE 102022106741; 08.06.2022 DE 102022114438
(71) Anmelder: Ford Global Technologies, LLC, Dearborn, MI 48126 (US)
(72) Erfinder: Urhahne, Joseph, 50259 Pulheim (DE); Christen, Frederic, 4728 Hergenrath (BE)
(74) Vertreter: Markowitz, Markus

(57) **Zusammenfassung**

Die vorliegende Erfindung betrifft ein System zum Übermitteln von Daten mittels Datenpaketen (D), umfassend eine Datenübermittlungseinheit (1) sowie mehrere Fahrzeuge (2), die Fahrzeuge (2) jeweils aufweisend eine fahrzeugseitige Datenempfangseinheit (3) zum Empfangen von seitens der Datenübermittlungseinheit (1) ausgesendeten Datenpaketen (D).

Um bei einem solchen System eine geringere Bandbreitenlast bei der Datenübermittlung, geringere Rechenzeiten sowie geringere Rechenkapazitäten zu ermöglichen, wird vorgeschlagen, dass die Datenübermittlungseinheit (1) dazu eingerichtet ist, die Datenpakete (D) im Wege einer Broadcast-Übertragung an die fahrzeugseitigen Datenempfangseinheiten (3) der mehreren Fahrzeuge (2) auszusenden.

## Beschreibung

Die vorliegende Erfindung betrifft ein System zum Übermitteln von Daten mittels Datenpaketen, umfassend eine Datenübermittlungseinheit sowie mehrere Fahrzeuge, die Fahrzeuge jeweils aufweisend eine fahrzeugseitige Datenempfangseinheit zum Empfangen von seitens der Datenübermittlungseinheit ausgesendeten Datenpaketen. Ferner betrifft die vorliegende Erfindung eine Datenübermittlungseinheit, ein Fahrzeug umfassend eine fahrzeugseitige Datenempfangseinheit, sowie eine fahrzeugseitige Datenempfangseinheit zur Verwendung in einem solchen System. Letztlich betrifft die vorliegende Erfindung ein Verfahren zum Übermitteln von Daten mittels Datenpaketen von einer Datenübermittlungseinheit an mehrere Fahrzeuge.

Die fortschreitende Entwicklung im Bereich der vernetzten Datenkommunikation wirkt sich mehr und mehr auf den Kraftfahrzeugsektor aus, insbesondere auf den Bereich des "autonomen Fahrens". Grundsätzlich spielt "autonomes Fahren" bei aktuellen und künftigen Fahrzeugentwicklungen eine immer wichtigere Rolle. Ein beträchtlicher Teil aktueller Entwicklungen befasst sich mit der Interaktion von autonom betriebenen Fahrzeugen und deren Umgebung. Die Entwicklung effizienter und rechenkapazitätssparender Datenübertragungssysteme ist dabei von hohem Interesse.

Bei autonom oder remote betriebenen Fahrzeugen erfolgt die Kommunikation (u.a. Datenübermittlung) mit ihrer Umgebung, beispielsweise Infrastruktureinheiten eines Infrastruktursystems, in der Regel via Punkt-zu-Punkt-Datenübermittlung, d.h. ein einzelnes Fahrzeug empfängt eine von einer Datenübermittlungseinheit (beispielsweise einer Infrastruktureinheit) ausgesendetes Datenpaket. Sofern mehr als ein Fahrzeug Nachrichten von einer Datenübermittlungseinheit empfangen soll, so müssen mehrere Punkt-zu-Punkt-Verbindungen zwischen den jeweiligen Fahrzeugen und der Datenübermittlungseinheit bereitgestellt werden.

Derartige Lösungen resultieren häufig in einer hohen Bandbreitenlast für jene zwischen der Datenübermittlungseinheit und den einzelnen Fahrzeugen bereitgestellten Datenübermittlungsverbindungen. Die dabei übermittelten Datenpakete umfassen Datenpaket-Header mit administrativen Informationen wie auch Sicherheitsinformationen, um beispielsweise die jeweilige Datenübermittlungsverbindung gegen Cyberangriffe zu schützen.

Ein solcher auf Sicherheitsinformationen gerichteter Teil-Header eines Datenpaket-Headers kann eine beträchtliche Datenmenge (beispielsweise 300 Byte) umfassen, die mit jeder von der Datenübermittlungseinheit an ein einzelnes Fahrzeug gesendeten Nachricht übermittelt werden müssen. Bei Anwendungen mit mehreren Datenübermittlungseinheit-Fahrzeug-Verbindungen (z. B. einer zentralen Datenübermittlungseinheit, die Daten an mehrere Fahrzeuge, die beispielsweise einer Fahrzeugflotte oder einem Fuhrpark angehören können, übermittelt) erhöht sich die Menge der zu übertragenden Daten mit jedem weiteren Fahrzeug, da die entsprechenden Datenpakete im Wege singulärer Datenübermittlung zwischen der Datenübermittlungseinheit und den jeweiligen Fahrzeugen einzeln übertragen werden müssen.

Neben der beträchtlichen Menge an zu übertragenden Daten, erfordert eine derartige Übertragung von Datenpaketen hohe Rechenzeiten und Rechenkapazitäten auf Seiten der Datenübermittlungseinheit.

Entsprechend liegt der vorliegenden Erfindung die Aufgabe zugrunde, ein System zum Übermitteln von Daten mittels Datenpaketen zwischen einer Datenübermittlungseinheit und mehreren Fahrzeugen bereitzustellen, wobei das System eine geringere Bandbreitenlast bei der Datenübermittlung, geringere Rechenzeiten sowie geringere Rechenkapazitäten erfordert. Eine entsprechende Aufgabe liegt der mit der Erfindung vorgeschlagenen Datenübermittlungseinheit, dem vorgeschlagenen Fahrzeug, der vorgeschlagenen fahrzeugseitigen Datenempfangseinheit und dem vorgeschlagenen Verfahren zugrunde.

Gelöst wird diese Aufgabe mit einem System nach Anspruch 1, einer Datenübermittlungseinheit nach Anspruch 13, einem Fahrzeug nach Anspruch 14 sowie einem Verfahren nach Anspruch 15.

Die im Rahmen der vorliegenden Beschreibung und in den Ansprüchen genannten und beschriebenen Merkmale betreffen mögliche Ausgestaltungen der Erfindung, dies unabhängig von der jeweils im Zusammenhang eines Merkmals beanspruchten Anspruchskategorie. So können im Rahmen des vorgeschlagenen Systems beanspruchte oder beschriebene Merkmale auch Ausgestaltungen der vorgeschlagen Datenübermittlungseinheit, des Fahrzeugs, der fahrzeugseitigen Datenempfangseinheit oder des Verfahrens sein. Dies gilt Kategorie-übergreifend.

So betrifft die vorliegende Erfindung zunächst ein System zum Übermitteln von Daten mittels Datenpaketen, umfassend eine Datenübermittlungseinheit sowie mehrere Fahrzeuge, die Fahrzeuge jeweils aufweisend eine fahrzeugseitige Datenempfangseinheit zum Empfangen von seitens der Datenübermittlungseinheit ausgesendeten Datenpaketen. Das System zeichnet sich dadurch aus, dass die Datenübermittlungseinheit dazu eingerichtet ist, die Datenpakete im Wege einer Broadcast-Übertragung an die fahrzeugseitigen Datenempfangseinheiten der mehreren Fahrzeuge auszusenden.

Unter einem "Fahrzeug" kann vorliegend ein radgebundenes Kraftfahrzeug (z. B. ein Personenkraftfahrzeug oder ein Nutzfahrzeug) verstanden werden, jedoch auch jegliche andere Fahrzeuge, wie Agrarfahrzeuge, Baustellenfahrzeuge, Gabelstapler, Lastfahrzeuge, Transportfahrzeuge, Schienenfahrzeuge, Luftfahrzeuge (z. B. Drohnen), Wasserfahrzeuge etc. Ein "Fahrzeug" kann einen beliebigen Antrieb aufweisen, beispielsweise einen Elektroantrieb, einen Verbrennungsmotor, einen Dieselmotor, einen Hybridantrieb, einen Wasserstoffantrieb, einen Gasantrieb etc. Insbesondere kann vorliegend unter einem Fahrzeug ein autonom fahrendes Fahrzeug verstanden werden. Auch anderweitige mobile Einheiten (z. B. robotische Einheiten) können als "Fahrzeug" aufgefasst werden.

Die erwähnten "mehreren Fahrzeuge" können sich auf eine abgeschlossene Gruppe von Fahrzeugen beziehen, z. B. einen Fuhrpark, eine Fahrzeugflotte, eine Anzahl von Fahrzeugen eines Logistikzentrums, eine Anzahl von Fahrzeugen innerhalb eines vorgegebenen Gebiets (z. B. einem Parkhaus oder Betriebsgelände), oder dergleichen. Insbesondere können sich die "mehreren Fahrzeuge" auf ein Fertigungsgelände (ein Werk) eines Fahrzeugherstellers beziehen, beispielsweise können die mehreren Fahrzeuge auf dem Fertigungsgelände neu hergestellt worden sein (Neufahrzeuge). Die Erfindung bezieht sich in diesen Fällen auf eine Steuerung eines autonomen Fahrbetriebs der Fahrzeuge in dem vorgegebenen Gebiet (z. B. Betriebsgelände, Fertigungsgelände etc.).

Mittels der erwähnten Broadcast-Übertragung von Datenpaketen von der Datenübermittlungseinheit an die fahrzeugseitigen Datenempfangseinheiten der mehreren Fahrzeuge, können die Fahrzeuge Daten und Informationen für einen autonomen Fahrbetrieb erhalten. Es kann vorgesehen sein, dass die Fahrzeuge die zum autonomen Fahren notwendigen Daten und Informationen ausschließlich über die Broadcast-Übertragung erhalten, ohne Notwendigkeit On-Board Sensoren (z. B. Radar, Lidar, GPS, oder Ultraschallsensoren) der Fahrzeuge nutzen zu müssen. Ferner kann vorgesehen sein, dass zusätzlich zu den zum autonomen Fahren notwendigen und mittels Broadcast-Übertragung übermittelten Daten und Informationen auch Daten und Informationen für das autonome Fahren zugrunde gelegt werden, die mittels On-Board Sensoren (z. B. Radar, Lidar, GPS, oder Ultraschallsensoren) der Fahrzeuge ermittelt werden.

Die bezeichneten Daten und Informationen, die im Wege einer Broadcast-Übertragung von der Datenübermittlungseinheit an die fahrzeugseitigen Datenempfangseinheiten ausgesendet werden, können Daten und Informationen betreffen, die mittels Sensoren in der Umgebung (also extern zu den Fahrzeugen) der Fahrzeuge ermittelt werden. Diese Sensoren können als Infrastruktursensoren bezeichnet werden. Mittels derartiger Sensoren kann zu jeder Zeit eine aktuelle Fahrzeugposition, Geschwindigkeit, Beschleunigung, Fahrtrichtung etc. der Fahrzeuge ermittelt werden. Darauf basierend können zum autonomen Fahren benötigte Daten und Informationen ermittelten werden, also jene Daten und Informationen, welche die künftige autonome Fahrt der Fahrzeuge zu einem nächsten Wegpunkt auf einer Route betreffen. Die seitens der Infrastruktursensoren ermittelten Daten und Informationen können beispielsweise in der Datenübermittlungseinheit (oder an anderer Stelle) gesammelt und in einem gemeinsamen Datenpaket an die fahrzeugseitigen Datenempfangseinheiten ausgesendet werden. Die Infrastruktursensoren sind also vorzugsweise mit der Datenübermittlungseinheit signaltechnisch bzw. datenübermittlungstechnisch verbunden (insbesondere kabellos). Alternativ können einzelne Infrastruktursensoren mit einer jeweiligen Datenübermittlungseinheit signaltechnisch bzw. datenübermittlungstechnisch verbunden sein und somit die mittels des jeweiligen Infrastruktursensors ermittelten Daten und Informationen als Datenpaket(e) über die jeweilige Datenübermittlungseinheit an die Fahrzeuge im Wege einer Broadcast-Übertragung aussenden. Die Datenverarbeitung und Ermittlung von Fahrinformationen betreffend das autonome Fahren eines jeweiligen Fahrzeugs können dann On-Board des Fahrzeugs erfolgen, z. B. in einem Boardcomputer.

Die von der Datenübermittlungseinheit übermittelten Daten und Informationen können auch einzelne Routenpunkte oder eine Sequenz von Routenpunkten einer von dem Fahrzeug zu absolvierenden Route betreffen. Dabei können sich die übermittelten Daten und Informationen auf Kartendaten beziehen. Die Berechnung der Routeninformationen kann dabei auch im Fahrzeug erfolgen, beispielsweise in einem Boardcomputer. In diesem Fall können die Kartendaten bereits auf dem Boardcomputer vorliegen. Anhand der übermittelten Daten und Informationen kann fahrzeugseitig ermittelt werden, wo sich das Fahrzeug aktuell befindet und welche Maßnahmen zur Ansteuerung eines nächsten Routenpunkts erforderlich sind. Diese Maßnahmen können sodann vom Fahrzeug eingeleitet werden.

Bei der "Datenübermittlungseinheit" kann es sich um eine zentrale Datenübermittlungseinheit handeln, d.h. eine Datenübermittlungseinheit, die Daten mittels Datenpaketen an mehrere Fahrzeuge senden kann. Das Senden von Daten kann automatisiert oder manuell erfolgen. Die Datenübermittlungseinheit kann mit einem Computer betrieben werden oder Teil eines Computers sein. Im Sinne der Erfindung kann es sich bei einer Datenübermittlungseinheit um eine einzige (zentrale) Datenübermittlungseinheit handeln, gleichsam kann sich eine Datenübermittlungseinheit aus mehreren Sub-Datenübermittlungseinheiten zusammensetzen, die an unterschiedlichen Stellen eines Gebiets (z. B. Betriebsgeländes, Fertigungsgeländes) angeordnet sind.

Unter einer "fahrzeugseitigen Datenempfangseinheit" ist eine Datenempfangseinheit zu verstehen, mit der von der Datenübermittlungseinheit ausgesendete Datenpakete empfangen werden können. Ferner bedeutet "fahrzeugseitig", dass die Datenempfangseinheit Bestandteil des Fahrzeugs ist, also in oder an dem Fahrzeug oder einer Komponente desselbigen angeordnet ist. Die Datenempfangseinheit kann Teil eines Bordcomputers des Fahrzeugs sein oder mit diesem signaltechnisch verbunden sein.

Mit einem solchen System werden anstatt der eingangs erwähnten Punkt-zu-Punkt-Datenübermittlungsverbindungen zwischen einer (zentralen) Datenübermittlungseinheit (z. B. Infrastruktureinheit) als Sender und den Fahrzeugen als Empfänger, eine Broadcast-Verbindung bereitgestellt. Dies bedeutet, dass sich ein von der Datenübermittlungseinheit ausgesendetes Datenpaket (z. B. eine Nachricht) an mehrere Fahrzeuge als Empfänger richtet, und von diesen empfangen wird. Die dem Datenpaket zugrunde liegenden Informationen werden dabei nur einmal versendet, was die Bandbreitenlast reduzieren kann, die Rechenkapazität der Datenübermittlungseinheit schont und deren Rechendauer reduziert. Ein solches via einer Broadcast-Übertragung versendetes Datenpaket kann einen Datenpaket-Header (auch Kopfinformationen) umfassen, der vorzugsweise die gleiche Größe aufweist, wie ein entsprechender Datenpaket-Header eines an ein einzelnes Fahrzeug gesendeten Datenpakets (wie einleitend beschrieben und aus dem Stand der Technik bekannt).

Ferner kann ein solches Datenpaket einen Datenpaket-Nachrichtenkörper (auch als Nutzdaten bezeichnet) aufweisen, welcher Informationen (z. B. einen Nachrichtentext) umfasst, um mehrere Fahrzeuge gleichzeitig mit Anweisungen oder Befehlen für beispielsweise bestimmte autonome Fahrmanöver oder Routeninformationen zu adressieren. Über den Datenpaket-Nachrichtenkörper können - wie erwähnt - Daten und Informationen an die Fahrzeuge weitergegeben werden, die vorab auf Basis von mittels Infrastruktursensoren in der Umgebung der Fahrzeuge ermittelt wurden. Die erwähnten Infrastruktursensoren können beispielsweise eine oder mehrere Kameras, Lidar-Sensoren, Radar-Sensoren, Infrarot-Sensoren, und/oder Laser-Sensoren sein. Diese Infrastruktursensoren sind dabei extern zu den Fahrzeugen angeordnet, beispielsweise innerhalb eines vorgegebenen Gebiets. Auch können - wie erwähnt - über den Datenpaket-Nachrichtenkörper einzelne Routenpunkte oder eine Sequenz von Routenpunkten einer von dem Fahrzeug zu absolvierenden Route an die Fahrzeuge übermittelt werden.

Die Erfindung kann insbesondere im Bereich des autonomen Fahrens von Fahrzeugen eingesetzt werden, insbesondere dem autonomen Fahren bei niedrigen Geschwindigkeiten. Eine mögliche Anwendung/Funktion kann das "Depot Marshalling" sein, das für die Automatisierung von Fahrprozessen in Auslieferungsdepots vorgeschlagen wird. Es steigert die Effizienz von Fahrzeugbewegungen, indem es Zustellfahrer von der Aufgabe entbindet, die Fahrzeuge auf dem Gelände eines Depots zu steuern, einschließlich des Be- und Entladens von Waren, des Aufladens der Batterien an einer Ladestation, des Auffindens eines Parkplatzes für Pausen und Übernachtungen, des Einfahrens in Autowaschanlagen usw. Der Fahrer kann ein Fahrzeug z. B. in einer Drop-off-Zone abstellen und es nach einer gewissen Zeit im Depot z. B. in einer Pick-up-Zone wieder in Empfang nehmen, ohne die inneren Depotbereiche betreten zu müssen. Ein erfindungsgemäßes System kann unmittelbar bei einem solchen "Depot Marshalling" eingesetzt werden, entsprechende Informationen zu Fahrzeugbewegungen, einer Verkehrssituation im Depot, Warenannahme- und Beladungsaufgaben, Warenabgabe- und Entladungsaufgaben, Ladestatus von Ladestationen, Parkplatzbelegungen etc. können über eine Broadcast-Übertragung von einer (zentralen) Datenübermittlungseinheit (rechenkapazitätssparend, rechenzeitsparend und mit geringer Bandbreitenlast) an die dem Depot zugehörigen Fahrzeuge gesendet werden. Diese Informationen können von den (autonomen) Fahrzeugen bei der Ausführung von Fahrmanövern, Fahrrouten etc. berücksichtigt werden.

Ein weiterer Anwendungsbereich der Erfindung betrifft das "Factory-Marshalling", womit in einem Werk, in welchem Fahrzeuge hergestellt, montiert oder bearbeitet werden, autonom fahrend über das Werkgelände/Fertigungsgelände bewegt werden können. Damit kann der menschliche Aufwand zur Bewegung der Fahrzeuge von einem Ort zum nächsten deutlich reduziert werden.

Die Datenpakete können auf Basis aller zur Datenübermittlung geeigneter Datenübertragungsmethoden zwischen der Datenübermittlungseinheit und den Fahrzeugen (z. B. den fahrzeugseitigen Datenempfangseinheiten) übermittelt werden. Die Kommunikation kann eine Nah-, Mittel- oder Fernfeldkommunikation betreffen. Insbesondere kommt eine Datenübermittlung auf Basis eines Geo-Netzwerks wie C-V2X-PC5 in Betracht. C-V2X (Cellular Vehicle-to-Everything) ist eine Funktechnologie, die beim autonomen Fahren und bei intelligenten Verkehrssystemen (ITS) eingesetzt wird. C-V2X auf PC5-Basis verwendet eine RF (Radio Frequency) Sidelink-Direktkommunikation für eine einsatzkritische Fahrzeugsensor-Konnektivität mit geringer Latenz. Weiterhin kann zur Datenübermittlung das Mobilfunknetz selbst als Übertragungsmedium zwischen der Datenübermittlungseinheit und den Fahrzeugen (z. B. den fahrzeugseitigen Datenempfangseinheiten) verwendet werden, das entweder öffentliche oder private Teile von Mobilfunkzellen umfasst, die auch als zellularer Uu-Link bezeichnet werden. Es sei betont, dass über diese Datenübermittlungsmöglichkeiten auch ein rückwärtiges Aussenden von Antwort-Datenpaketen erfolgen kann, nämlich von einer fahrzeugseitigen Datensendeeinheit an eine Daten-Empfangseinheit als Teil der Datenübermittlungseinheit. Ein Antwort-Datenpaket kann als Antwort/Respons auf den Erhalt eines empfangenen Datenpakets ausgesendet werden.

Grundsätzlich kann die Datenübermittlung auf Funk basieren, geeignete Funkstandards können WLAN (IEEE 802.11), Bluetooth (IEE 802.15.1), 5G (3GPP Release 15), 4G oder LPWAN (Low Power Wide Area Network) sein. Weiterhin können auch WirelessHART (IEC 62591) oder Sigfox (Sigfox Proprietary) Verwendung finden. Allgemein kommt jegliche Art der mobilen Datenübertragung in Betracht, die sich für eine Broadcast-Datenübermittlung eignet.

Bei der Bluetooth Verbindung handelt es sich um einen Industriestandard gemäß IEEE 802.15.1 für die Datenübertragung per Funksignal über kurze Distanzen.

Unter WIFI, auch als wireless LAN (WLAN) gemäß IEEE 802.11 bekannt, ist ebenfalls eine Datenübertragung per Funksignal gemeint. Es handelt sich hierbei um den wohl gängigsten Standard zur Datenübertragung per Funk im Office, Heim und Industriebereich.

Unter der Abkürzung LPWAN (Low Power Wide Area Network) werden verschiedene Klassen von Netzwerkprotokollen zur Verbindung von Niedrigenergiegeräten wie batteriebetriebene Sensoren mit einem Server zusammengefasst. Die Protokolle sind so ausgelegt, dass eine große Reichweite und ein niedriger Energieverbrauch der Endgeräte bei niedrigen Betriebskosten erreicht werden können. Beispielhafte LPWAN Technologien sind LoRaWAN, LTE-M, NB-IoT und Sigfox.

LoRaWAN, kurz für Long Range Wide Area Network (LoRaWAN), ist ein Standard der LoRa Alliance.

LTE-M und NB-IoT sind Funkstandards, die von der 3GPP standardisiert wurden und im 4G Mobilfunknetz und auch unter 5G weiterhin verfügbar sind. NB-IoT nutzt bspw. die durch die Weiterentwicklung der Mobilfunk-Endgeräte hin zu höheren Frequenzbändern freiwerdenden Mobilfunkfrequenzen des GSM-900 Frequenzbandes.

Sigfox ist ein proprietäres Funksystem der gleichnamigen französischen Firma Sigfox SA, das im SRD-Band (868 Megahertz in Europa, 902 Megahertz in den USA) funkt.

Sämtliche der vorgenannten Standards können sich grundsätzlich zur Datenübermittlung im Rahmen der vorliegenden Erfindung eignen.

Weitere Ausgestaltung der Erfindung sind in den Unteransprüchen angegeben, die nachfolgend genauer beschrieben seien.

Nach einer ersten Ausgestaltung der Erfindung kann vorgesehen sein, dass die Datenübermittlungseinheit sowie die fahrzeugseitigen Datenempfangseinheiten zur kabellosen Datenübermittlung eingerichtet sind. Bei einer kabellosen (drahtlosen) Datenübermittlung kann auf den Einsatz von Verkabelungen zwischen Sender und Empfänger verzichtet werden. Dies erlaubt eine flexible Positionierung/Bewegung der Fahrzeuge zur Datenübermittlungseinheit ohne dabei die Datenübermittlung zu beeinträchtigen oder durch mechanische Komponenten (wie Kabelverbindungen) im Bewegungsspielraum gehindert zu sein.

Nach einer weiteren Ausgestaltung der Erfindung kann vorgesehen sein, dass die Datenübermittlungseinheit eine Daten-Sendeeinheit zum Aussenden der Datenpakete an die fahrzeugseitigen Datenempfangseinheiten und gegebenenfalls eine Daten-Empfangseinheit umfasst. Die erwähnte Daten-Sendeeinheit kann als Sender verstanden werden, der dazu eingerichtet ist, Datenpakete kabellos auszusenden. Zusätzlich kann vorgesehen sein, dass die Datenübermittlungseinheit eine Daten-Empfangseinheit umfasst, um beispielsweise von seitens der Fahrzeuge (z. B. einer fahrzeugseitigen Datensendeeinheit) rückgesendete Daten oder Datenpakete empfangen und verarbeiten zu können. Entsprechend kann nach einer weiteren Ausgestaltung der Erfindung vorgesehen sein, dass die Fahrzeuge nebst den jeweiligen fahrzeugseitigen Datenempfangseinheiten zusätzlich jeweils eine fahrzeugseitige Datensendeeinheit aufweisen. Die fahrzeugseitigen Datenempfangseinheiten und die fahrzeugseitigen Datensendeeinheiten können in den Fahrzeugen jeweils gemeinsame Baueinheiten in Form von Datenkommunikationseinheiten ausbilden.

Nach einer weiteren Ausgestaltung der Erfindung kann vorgesehen sein, dass die Datenpakete jeweils einen Nachrichtenkörper-Daten umfassenden Datenpaket-Nachrichtenkörper und einen Header-Informationen umfassenden Datenpaket-Header umfassen. Wie eingangs erwähnt kann ein Datenpaket-Nachrichtenkörper Nutzdaten beinhalten. Ein Datenpaket-Header kann Kopfinformationen des Datenpakets beinhalten. Der Datenpaket-Nachrichtenkörper kann Informationen betreffend sämtliche Fahrzeuge enthalten, die das Datenpaket empfangen.

Nach einer weiteren Ausgestaltung der Erfindung kann vorgesehen sein, dass der Datenpaket-Header einen oder mehrere Teil-Header aufweist, wobei ein Teil-Header als Header-Informationen administrative Informationen wie Adressinformationen, Sicherheitsinformationen, und/oder anderweitige Informationen umfasst. Derartige Informationen können relevant für den autonomen Fahrbetrieb oder bestimmte Fahraufgaben oder Fahrmanöver des Fahrzeugs sein.

Nach einer weiteren Ausgestaltung der Erfindung kann vorgesehen sein, dass die Sicherheitsinformationen Kodierungsinformationen, Authentifizierungsinformationen, Identifizierungsinformationen und/oder Signaturinformationen umfassen. Kodierungsinformationen können Informationen betreffen, die zum Auslesen oder Öffnen eines Datenpakets erforderlich sind bzw. von der fahrzeugseitigen Empfangseinheit dekodiert werden müssen. Entsprechende Dekodierinformationen können in der fahrzeugseitigen Empfangseinheit hinterlegt sein oder dieser separat zur Verfügung gestellt werden. Authentifizierungsinformationen können die Identität des Absenders des Datenpakets betreffen, also die Identität der Datenübermittlungseinheit. Anhand dieser Informationen kann, beispielsweise durch Abgleichen mit hinterlegten Daten, die Identität oder ein Identitätsnachweis des Absenders geprüft werden. Eine Identifikation betrifft die Identifizierung des besagten Absenders, während eine Authentifizierung eine Beweismöglichkeit beinhaltet. Derartige Kodierungsinformationen, Authentifizierungsinformationen, oder Identifizierungsinformationen erhöhen die Sicherheit bei der Datenübermittlung signifikant, erfordern in der Regel aber fahrzeugseitige Einrichtungen oder Mittel zum entsprechenden Auslesen der entsprechenden Informationen. Unter Signaturinformationen können beispielsweise digitale Signaturen (Codes, Stempel etc.) zu verstehen sein. In den Teil-Headern können insbesondere auch Informationen betreffend die Version des jeweiligen Datenübertragungsprotokolls (Prokotollversion), eine Kennung eines jeweiligen Datenpakets bzw. einer Nachricht (Message-ID), und eine Kennung der aussendenden Datenübermittlungseinheit (Stations-ID) enthalten sein.

Nach einer weiteren Ausgestaltung der Erfindung kann vorgesehen sein, dass der Datenpaket-Nachrichtenkörper Informationen für einen autonomen Fahrbetrieb der Fahrzeuge als Nachrichtenkörper-Daten umfasst. Beispielsweise können dies Routeninformationen, Status-Informationen von Parkflächen (belegt, reserviert, frei), Status-Informationen von Lade- oder Tankplätzen (belegt, reserviert, frei), Status-Informationen von Belade- oder Entladestellen (Beladung möglich, Beladung nicht möglich, Entladung möglich, Entladung nicht möglich etc.) oder anderweitige Informationen sein, die den autonomen Fahrbetrieb eines Fahrzeugs beeinflussen können.

Bevorzugt betreffen die Informationen für den autonomen Fahrbetrieb der Fahrzeuge als Nachrichtenkörper-Daten aber Grenzwertbereiche für die Geschwindigkeit (Minimalgeschwindigkeit, Maximalgeschwindigkeit), und für die Begrenzung der Bewegung des Fahrzeugs (seitlich und in Längsrichtung). Die Informationen für den autonomen Fahrbetrieb können auch eine Ablaufzeit umfassen, die eine Zeit festlegt, nach welcher sich das Fahrzeug im Stillstand befinden muss. Nach Ablauf der Ablaufzeit kann beispielsweise ein bestimmtes Notfallfahrmanöver und/oder Notfallbremsmanöver, wie eine sofortige Notbremsung, ausgelöst werden. Diese Informationen für den autonomen Fahrbetrieb eines Fahrzeugs können in einem Daten-Container als Teil des Nachrichtenkörpers enthalten sein, wobei der Daten-Container einem bestimmten Fahrzeug zugeordnet ist, beispielsweise über eine Zuordnungs-Kennung. In einer vorteilhaften Ausgestaltung sind diese Informationen für den autonomen Fahrbetrieb der Fahrzeuge optionaler Bestandteil eines einem bestimmten Fahrzeug zugeordneten Daten-Containers.

Nach einer weiteren Ausgestaltung der Erfindung kann vorgesehen sein, dass der Datenpaket-Nachrichtenkörper Task-Anweisungen für die Fahrzeuge als Nachrichtenkörper-Daten umfasst. Insbesondere bei Verwendung von autonom betriebenen Fahrzeugen beim "Depot Marshalling", aber auch bei anderen Anwendungen (z. B. der Verwendung von autonomen Fahrzeugen in einem Logistikzentrum oder auf einem Betriebsgelände) können den Fahrzeugen bestimmte Aufgaben (Tasks) vorgegeben werden, die sich beispielsweise in eine übergeordnete Aufgabe (z. B. eine abzuarbeitende Route mit bestimmten Tasks) eingliedern. Solche Tasks können eine Aufgabe (z. B. Halten, Parken, Losfahren etc.) des Fahrzeugs zu einem bestimmten Zeitpunkt an einem bestimmten Ort (einer bestimmten Geoposition) betreffen. Als Task-Anweisungen können aber auch autonome Fahrbefehle für die Längs- und Querführung des Fahrzeugs (d.h. die direkte Steuerung) verstanden werden. Gleichsam kann eine Task-Anweisung eine Notfallnachricht sein, wobei in Folge des Empfangs einer solchen Notfallnachricht ein Notfall-Brems- und/oder Notfall-Fahrmanöver in einem bestimmten oder sämtlichen der mehreren Fahrzeuge auslösbar sind. Derartige Task-Anweisungen können in einem Daten-Container als Teil des Nachrichtenkörpers enthalten sein, wobei der Daten-Container einem bestimmten Fahrzeug zugeordnet ist, beispielsweise über eine Zuordnungs-Kennung. In einer vorteilhaften Ausgestaltung sind die Task-Anweisungen zwingender Bestandteil eines einem bestimmten Fahrzeug zugeordneten Daten-Containers.

Nach einer weiteren Ausgestaltung der Erfindung kann vorgesehen sein, dass der Datenpaket-Nachrichtenkörper Karten-, Umgebungs- und/oder Verkehrsinformationen als Nachrichtenkörper-Daten umfasst. Karteninformationen können sich auf einen vorgegebenen Bereich beziehen, in denen ein Fahrzeug bewegt wird, z. B. ein Betriebsgelände, ein Stadtteil etc. Karteninformationen können Karten-Updates sein oder das Einlesen neuer Karten betreffen. Umgebungsinformationen können Informationen in der Umgebung eines Fahrzeugs betreffen, beispielsweise Geopositionen bestimmter Funktions- und Infrastruktureinheiten, z. B. die Geoposition einer Tankstelle, einer Ladestation oder dergleichen. Umgebungsinformationen können Wetterinformationen oder Witterungszustände in Bezug auf Fahrwege betreffen (Nässe, Glätte etc.). Verkehrsinformationen können beispielsweise ein Verkehrsaufkommen, Stauinformationen, Ampelschaltungen, Wegschäden, präferierte Routen etc. betreffen. Als Karteninformationen können auch Koordinaten von Routenpunkten entlang einer Route verstanden werden, entlang welcher ein bestimmtes Fahrzeug eine autonome Fahrt absolviert. Die Abfolge der Routenpunkte kann eine Trajektorie bilden, die das Fahrzeug in seiner eigenen Längs- und Querführung fahren soll. Derartige Karten-, Umgebungs- und/oder Verkehrsinformationen können in einem Daten-Container als Teil des Nachrichtenkörpers enthalten sein, wobei der Daten-Container einem bestimmten Fahrzeug zugeordnet ist, beispielsweise über eine Zuordnungs-Kennung. In einer vorteilhaften Ausgestaltung sind die Karten-, Umgebungs- und/oder Verkehrsinformationen optionaler Bestandteil eines einem bestimmten Fahrzeug zugeordneten Daten-Containers.

Nach einer weiteren Ausgestaltung der Erfindung kann vorgesehen sein, dass der Datenpaket-Nachrichtenkörper eine Zuordnungs-Kennung umfasst, die einem bestimmten Fahrzeug der mehreren Fahrzeuge zugeordnet ist, und die eine Zuordnung von Nachrichtenkörper-Daten in Bezug auf ein bestimmtes Fahrzeug der mehreren Fahrzeuge ermöglicht. Die Zuordnungs-Kennung kann mehrere Einzelkennungen umfassen, beispielsweise eine Missions-Kennung, die einem bestimmten Fahrzeug einen bestimmten Fahrauftrag (Mission) zuordnet. Als Mission kann beispielsweise eine fahrerlose Fahrt von einem Ausgangsroutenpunkt bis zu einem Endroutenpunkt festgelegt werden. Auch anderweitige Fahraufträge/Fahraufgaben können sich auf eine Zuordnungs-Kennung beziehen. Umfasst die Zuordnungs-Kennung mehrere Einzelkennungen, so kann sich eine Einzelkennung als Sub-Kennung auch auf Unteraufträge während der Ausführung einer Mission beziehen, beispielsweise auf einen Halt an einer Tank- oder Ladestation, einen Besuch in einer Waschanlage etc.

Nach einer weiteren Ausgestaltung der Erfindung kann vorgesehen sein, dass der Datenpaket-Nachrichtenkörper einen oder mehrere Daten-Container umfasst, wobei ein jeweiliger Daten-Container einem bestimmten Fahrzeug der mehreren Fahrzeuge zugeordnet ist, und wobei ein einem bestimmten Fahrzeug zugeordneter Daten-Container die dem bestimmten Fahrzeug zugeordnete Zuordnungs-Kennung und diesem Fahrzeug zugeordnete Nachrichtenkörper-Daten umfasst.

Nach einer weiteren Ausgestaltung der Erfindung kann vorgesehen sein, dass die Datenübermittlungseinheit dazu eingerichtet ist, im Wege der Broadcast-Übertragung ein Datenpaket auszusenden und die fahrzeugseitigen Datenempfangseinheiten dazu eingerichtet sind, das Datenpaket zu empfangen und zu verarbeiten.

Wie erwähnt, sendet die Datenübermittlungseinheit bei einer solchen Broadcast-Übertragung ein Datenpaket einmal aus und wird von den jeweiligen fahrzeugseitigen Datenempfangseinheiten empfangen. Ein gesondertes Versenden von Datenpaketen an jede einzelne Datenempfangseinheit im Wege von Punkt-zu-Punkt Verbindungen ist somit nicht erforderlich. Eine Verarbeitung der Daten kann von der Datenempfangseinheit durchgeführt werden (z. B. eine Vorprozessierung) und/oder von nachgeordneten Datenverarbeitungseinheiten (z. B. eines Boardcomputers), an welche die Daten weitergeleitet werden. Bei einer solchen Broadcast-Übertragung kann vorgesehen sein, dass ein Datenpaket zwar an alle fahrzeugseitigen Datenempfangseinheiten übermittelt wird, ein bestimmtes Fahrzeug das Datenpaket jedoch nicht ausliest (z. B. wenn sich dieses im Stillstand befindet).

Nach einer weiteren Ausgestaltung der Erfindung kann vorgesehen sein, dass die fahrzeugseitigen Datensendeeinheiten jeweils dazu eingerichtet sind, Antwort-Datenpakete an die Daten-Empfangseinheit der Datenübermittlungseinheit auszusenden, wobei die Antwort-Datenpakete jeweils einen Antwort-Nachrichtenkörper-Daten umfassenden Antwort-Datenpaket-Nachrichtenkörper und einen Antwort-Header-Informationen umfassenden Antwort-Datenpaket-Header umfassen, wobei der Antwort-Datenpaket-Header einen oder mehrere Antwort-Teil-Header aufweist. Im Antwort-Datenpaket-Header bzw. den Antwort-Teil-Headern sind vorzugsweise dieselben Daten/Informationen enthalten wie im Datenpaket-Header bzw. den zugehörigen Teil-Headern jenes von der Datenübermittlungseinheit im Wege der Broadcast-Übertragung an die Fahrzeuge ausgesendeten Datenpakets. Die Antwort-Nachrichtenkörper-Daten können aktuelle Statusinformationen eines bestimmten Fahrzeugs betreffen, beispielsweise eine Statusinformationen über eine "Aktivierung eines autonomen Fahrbetriebs", aktuelle Fahrzeugdaten wie eine aktuelle Geschwindigkeit, eine aktuelle Ausrichtung des Fahrzeugs etc. Auch kann in dem Antwort-Nachrichtenkörper die schon erwähnte Zuordnungs-Kennung enthalten sein. Die Antwort-Datenpakete können ebenfalls im Wege einer Broadcast-Übertragung von den jeweiligen fahrzeugseitigen Datensendeeinheiten an die Datenübermittlungseinheit ausgesendet werden (in diesem Fall können auch andere Fahrzeuge die Antwort-Datenpakete empfangen), oder im Wege von Ende-zu-Ende Verbindungen zwischen den fahrzeugseitigen Datensendeeinheiten und der Datenübermittlungseinheit. Eine Broadcast-Übertragung auch der Antwort-Datenpakete ist vorteilhaft, da die Antwort-Datenpakete nebst an die Daten-Empfangseinheit der Datenübermittlungseinheit auch an anderweitige Empfänger übertragen werden kann.

Nach einer weiteren Ausgestaltung der Erfindung kann vorgesehen sein, dass die Datenübermittlungseinheit dazu eingerichtet ist, periodisch, insbesondere mit einer Periodizität von 50 ms, 100 ms, 150 ms, oder 200 ms, im Wege der Broadcast-Übertragung Datenpakete an die fahrzeugseitigen Datenempfangseinheiten der mehreren Fahrzeuge auszusenden. Damit kann eine andauernde Datenübermittlung in Richtung der Datenempfangseinheiten der Fahrzeuge gewährleistet werden. Eine periodische Aussendung von Datenpaketen bedeutet, dass in zeitlichen Abständen von z. B. 50 ms, 100 ms, 150 ms oder 200 ms ein Datenpaket ausgesendet wird. Ein enger zeitlicher Abstand ermöglicht eine besonders genaue Kontrolle und Steuerung eines autonom fahrenden Fahrzeugs, während ein längerer zeitlicher Abstand vorteilhaft in Bezug auf eine Reduzierung der Daten- und Rechenkapazitäten ist.

Nach einer weiteren Ausgestaltung der Erfindung kann vorgesehen sein, dass die fahrzeugseitigen Datensendeeinheiten jeweils dazu eingerichtet sind, periodisch, insbesondere mit einer Periodizität von 50 ms, 100 ms, 150 ms oder 200 ms, Antwort-Datenpakete an die Datenübermittlungseinheit auszusenden. Vorzugsweise ist das Aussenden der Datenpakete und das Aussenden der Antwort-Datenpakete zeitlich synchronisiert. Dies kann meinen, dass die Datenpakete und Antwort-Datenpakete zeitgleich ausgesendet werden, oder aber in einem definierten zeitlichen Versatz.

Nach einer weiteren Ausgestaltung der Erfindung kann vorgesehen sein, dass die Datenübermittlungseinheit und eine fahrzeugseitige Datenkommunikationseinheit eines jeweiligen Fahrzeugs dazu eingerichtet sind, unabhängig vom Aussenden der Datenpakete im Wege der Broadcast-Übertragung, die Zuordnungs-Kennung über eine gesonderte Kommunikationsverbindung zu kommunizieren. Die Zuordnungs-Kennung kann dazu initial von der Datenübermittlungseinheit an die fahrzeugseitige Datenkommunikationseinheit gesendet werden oder umgekehrt. Die gesonderte Kommunikationsverbindung kann eine Ende-zu-Ende Verbindung sein. Die Kommunikation der Zuordnungs-Kennung über die gesonderte Kommunikationsverbindung erfolgt vorzugsweise zeitlich vorgelagert zu den im Wege der Broadcast-Übertragung ausgesendeten Datenpaketen. Umfasst die Zuordnungs-Kennung mehrere Einzelkennungen, so können die mehreren Einzelkennungen über die gesonderte Kommunikationsverbindung kommuniziert werden.

Nach einer weiteren Ausgestaltung der Erfindung kann vorgesehen sein, dass die Datenübermittlungseinheit dazu eingerichtet ist, eine Notfallnachricht im Wege der Broadcast-Übertragung an die fahrzeugseitigen Datenempfangseinheiten der mehreren Fahrzeuge auszusenden, wobei in Folge des Empfangs einer solchen Notfallnachricht ein Notfall-Brems- und/oder Notfall-Fahrmanöver in einem bestimmten oder sämtlichen der mehreren Fahrzeuge auslösbar ist. Das Aussenden der Notfallnachricht im Wege der Broadcast-Übertragung erfolgt vorzugsweise unmittelbar, d.h. ohne zeitliche Verzögerung und unabhängig von einer vorgegebenen Periodizität. Die Notfallnachricht kann Bestandteil eines Datenpaket-Nachrichtenkörpers sein. In dem Datenpaket-Nachrichtenkörper kann die Notfallnachricht in dem einem bestimmten Fahrzeug zugeordneten Daten-Container vorliegen, jedoch auch unabhängig davon. In Verbindung mit dem Erhalt einer solchen Notfallnachricht kann in den jeweiligen Fahrzeugen vorgesehen sein, dass ein Bremssystem des Fahrzeugs, insbesondere ein hydraulisches Bremssystem, vor-aktiviert (also vorgeladen) ist, sodass nach Erhalt der Notfallnachricht ohne zeitliche Verzögerung ein Bremsmanöver mit dem Bremssystem auslösbar ist.

Wie erwähnt, wird die Erfindung durch eine Datenübermittlungseinheit gelöst, die zur Verwendung in einem erfindungsgemäßen System eingerichtet ist.

Ferner wird die Erfindung durch ein Fahrzeug gelöst, umfassend eine fahrzeugseitige Datenempfangseinheit, sowie optional eine fahrzeugseitige Datensendeeinheit, wobei vorzugsweise die fahrzeugseitige Datenempfangseinheit und die fahrzeugseitige Datensendeeinheit eine fahrzeugseitige Datenkommunikationseinheit bilden, und wobei das Fahrzeug zur Verwendung in einem erfindungsgemäßen System eingerichtet ist.

Weiterhin wird die Erfindung, wie erwähnt, durch eine fahrzeugseitige Datenempfangseinheit gelöst, die zur Verwendung in einem erfindungsgemäßen System eingerichtet ist.

Letztlich betrifft die Erfindung ein Verfahren zum Übermitteln von Daten mittels Datenpaketen von einer Datenübermittlungseinheit an mehrere Fahrzeuge, umfassend: Aussenden eines Datenpakets im Wege einer Broadcast-Übertragung an fahrzeugseitige Datenempfangseinheiten der mehreren Fahrzeuge, Empfangen des Datenpakets seitens der fahrzeugseitigen Datenempfangseinheiten, und Verarbeiten von in dem Datenpaket enthaltenen Daten. Mittels der ausgesendeten Datenpakete kann ein autonomes Fahren der Fahrzeuge, insbesondere vorgegebener Fahrtrouten innerhalb eines vorgegebenen Gebiets, gesteuert werden. Dies erfolgt insbesondere über ein periodisches Aussenden von Datenpaketen an die Fahrzeuge. Gleichsam können seitens fahrzeugseitiger Datenkommunikationseinheiten Antwort-Datenpakete an die Datenübermittlungseinheit übermittelt werden, was ebenfalls periodisch erfolgen kann.

Die im Kontext des vorgeschlagenen Systems beschriebenen Merkmale und Ausgestaltungen können auch Ausgestaltungen des erfindungsgemäßen Verfahrens sein. Vorzugsweise wird das Verfahren mit einem erfindungsgemäßen System ausgeführt.

Weitere Vorteile und Ausgestaltungen der vorliegenden Erfindung seien anhand der Figuren beschrieben. Die Figuren zeigen in
- Fig. 1: ein aus dem Stand der Technik bekanntes System zum Übermitteln von Daten mittels Datenpaketen;
- Fig. 2: ein System zum Übermitteln von Daten mittels Datenpaketen gemäß der Erfindung;
- Fig. 3: einen schematischen Aufbau eines Datenpakets, welches mit einem nach der Erfindung gebildeten System übermittelt wird;
- Fig. 4: einen schematischen Aufbau eines Antwort-Datenpakets;
- Fig. 5: ein schematischer Aufbau eines Datenpakets samt Daten-Containern.

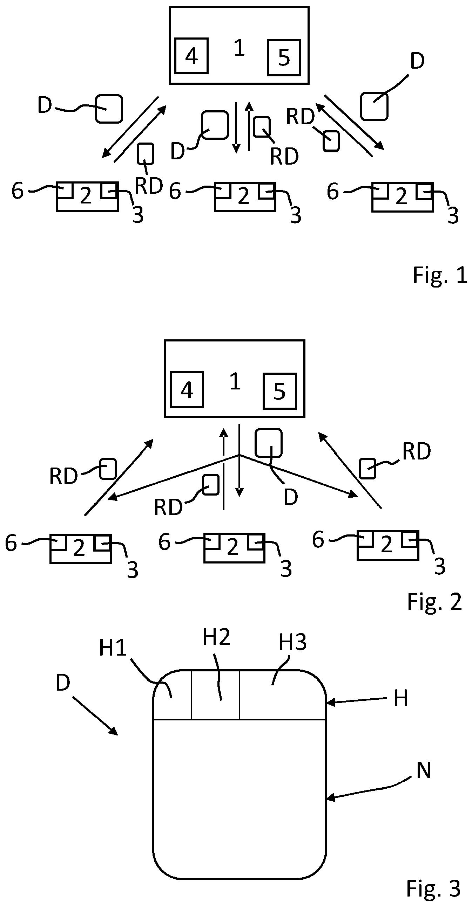

In der Figur 1 ist ein aus dem Stand der Technik bekanntes System zum Übermitteln von Daten mittels Datenpaketen D und Antwort-Datenpaketen RD dargestellt, umfassend eine Datenübermittlungseinheit 1 sowie mehrere Fahrzeuge 2. Die Fahrzeuge 2 weisen jeweils eine fahrzeugseitige Datenempfangseinheit 3 zum Empfangen von seitens der Datenübermittlungseinheit 1 ausgesendeten Datenpaketen D auf. Zum Aussenden der Datenpakete weist die Datenübermittlungseinheit 1 eine Daten-Sendeeinheit 4 auf. Bei dem hier dargestellten System werden Datenpakete D im Wege einer Punkt-zu-Punkt Übertragung zwischen der Datenübermittlungseinheit und den jeweiligen Fahrzeugen 2 übermittelt, d.h. durch gesonderte Datenverbindungen. Ferner weisen die Fahrzeuge 2 jeweils eine fahrzeugseitige Datensendeeinheit 6 auf, über welche Antwort-Datenpakete RD an eine Daten-Empfangseinheit 5 der Datenübermittlungseinheit 1 gesendet werden können.

Im Gegensatz dazu zeigt Figur 2 ein System nach der Erfindung, bei dem die Datenübermittlungseinheit 1 dazu eingerichtet ist, die Datenpakete D im Wege einer Broadcast-Übertragung an die fahrzeugseitigen Datenempfangseinheiten 3 der mehreren Fahrzeuge 2 auszusenden. Ein Datenpaket D wird somit einmal (von einer Daten-Sendeeinheit 4 der Datenübermittlungseinheit 1) ausgesendet und von allen Fahrzeugen 2 durch fahrzeugseitige Datenempfangseinheiten 3 empfangen. Dies wirkt sich vorteilhaft auf die Bandbreitenlast beim Übertragen des Datenpakets D, auf die Rechenkapazität der Datenübermittlungseinheit 1 und auf die Rechenzeit der Datenübermittlungseinheit 1 aus. Die Datenübertragung erfolgt kabellos. Ferner weisen die Fahrzeuge 2 neben der fahrzeugseitigen Datenempfangseinheit 3 jeweils eine fahrzeugseitige Datensendeeinheit 6 auf, mit welcher Antwort-Datenpakete RD an eine Daten-Empfangseinheit 5 der Datenübermittlungseinheit 1 ausgesendet werden.

Figur 3 zeigt einen schematischen Aufbau eines Datenpakets D, das im Rahmen der Erfindung über eine Broadcast-Datenübertragung von der Datenübermittlungseinheit 1 an die Fahrzeuge 2 ausgesendet wird. Dabei umfasst das Datenpaket D jeweils einen Datenpaket-Nachrichtenkörper N und einen Datenpaket-Header H. Der Datenpaket-Header H weist einen oder mehrere Teil-Header H1, H2, H3 auf, wobei ein Teil-Header H1, H2, H3 administrative Informationen wie Adressinformationen, Sicherheitsinformationen, und/oder anderweitige Informationen umfasst. Der Datenpaket-Nachrichtenkörper N umfasst Informationen für einem autonomen Fahrbetrieb der Fahrzeuge 2, also für eine Mehrzahl von Fahrzeugen 2. Im Gegensatz dazu umfassen Nachrichtenkörper N in Datenpaketen D bei aus dem Stand der Technik bekannten System (vgl. Fig. 1) in der Regel lediglich Informationen für ein bestimmtes Fahrzeug 2.

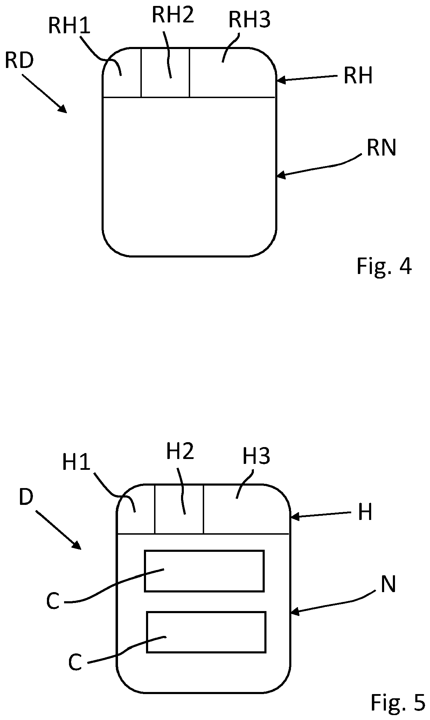

Der Datenpaket-Nachrichtenkörper N umfasst Informationen für einen autonomen Fahrbetrieb der Fahrzeuge 2, Task-Anweisungen für die Fahrzeuge 2, Karten-, Umgebungs- und/oder Verkehrsinformationen. Die genannten Sicherheitsinformationen sind Kodierungsinformationen, Authentifizierungsinformationen, Identifizierungsinformationen und/oder Signaturinformationen. Die Informationen für den autonomen Fahrbetrieb der Fahrzeuge 2, die Taskanweisungen für die Fahrzeuge 2 und die Karten-, Umgebungs- und/oder Verkehrsinformationen können gemeinsam in einem Daten-Container C (vgl. Fig. 5) enthalten sein, der einem bestimmten Fahrzeug (2) zugeordnet ist (z. B. über eine Zuordnungs-Kennung). Die Zuordnungs-Kennung ist vorzugsweise ebenfalls in dem genannten Daten-Container C enthalten. Der Nachrichtenkörper N kann mehrere Daten-Container C umfassen, die jeweils unterschiedlichen Fahrzeugen 2 zugeordnet sind, beispielsweise über entsprechende Zuordnungs-Kennungen.

Figur 4 zeigt schematisch den Aufbau eines Antwort-Datenpakets RD. Wie erwähnt, sind die fahrzeugseitigen Datensendeeinheiten 6 jeweils dazu eingerichtet, Antwort-Datenpakete RD an die Daten-Empfangseinheit 5 der Datenübermittlungseinheit 1 auszusenden. Die Antwort-Datenpakete RD umfassen jeweils einen Antwort-Nachrichtenkörper-Daten umfassenden Antwort-Datenpaket-Nachrichtenkörper RN und einen Antwort-Header-Informationen umfassenden Antwort-Datenpaket-Header RH, wobei der Antwort-Datenpaket-Header RH drei Antwort-Teil-Header RH1, RH2, RH3 aufweist. Im Antwort-Datenpaket-Header RH bzw. den Antwort-Teil-Headern RH1, RH2, RH3 sind vorzugsweise dieselben Daten/Informationen enthalten wie im Datenpaket-Header H bzw. den zugehörigen Teil-Headern H1, H2, H3 jenes von der Datenübermittlungseinheit 1 im Wege der Broadcast-Übertragung an die Fahrzeuge 2 ausgesendeten Datenpakets D. Die Antwort-Nachrichtenkörper-Daten betreffen aktuelle Statusinformationen eines bestimmten Fahrzeugs 2, beispielsweise eine Statusinformationen über eine "Aktivierung eines autonomen Fahrbetriebs", aktuelle Fahrzeugdaten wie eine aktuelle Geschwindigkeit, eine aktuelle Ausrichtung des Fahrzeugs 2 in Bezug auf eine Fahr-Trajektorie etc. Auch kann in dem Antwort-Nachrichtenkörper RN die schon erwähnte Zuordnungs-Kennung enthalten sein. Die Antwort-Datenpakete RD werden im Wege einer Broadcast-Übertragung von den jeweiligen fahrzeugseitigen Datensendeeinheiten 6 an die Datenübermittlungseinheit 1 ausgesendet (in diesem Fall können auch andere Fahrzeuge 2 die Antwort-Datenpakete empfangen). Alternativ werden die Antwort-Datenpakete RD im Wege von Ende-zu-Ende Verbindungen zwischen den fahrzeugseitigen Datensendeeinheiten 6 und der Datenübermittlungseinheit 1 übermittelt.

Die Erfindung beinhaltet also unter anderem die folgenden Ausführungsformen:
1. System zum Übermitteln von Daten mittels Datenpaketen (D), umfassend eine Datenübermittlungseinheit (1) sowie mehrere Fahrzeuge (2), die Fahrzeuge (2) jeweils aufweisend eine fahrzeugseitige Datenempfangseinheit (3) zum Empfangen von seitens der Datenübermittlungseinheit (1) ausgesendeten Datenpaketen (D), **dadurch gekennzeichnet,** dass die Datenübermittlungseinheit (1) dazu eingerichtet ist, die Datenpakete (D) im Wege einer Broadcast-Übertragung an die fahrzeugseitigen Datenempfangseinheiten (3) der mehreren Fahrzeuge (2) auszusenden.
2. System nach Anspruch 1, dadurch gekennzeichnet, dass die Datenübermittlungseinheit (1) sowie die fahrzeugseitigen Datenempfangseinheiten (3) zur kabellosen Datenübermittlung eingerichtet sind.
3. System nach Anspruch 1 oder 2, dadurch gekennzeichnet, dass die Datenübermittlungseinheit (1) eine Daten-Sendeeinheit (4) zum Aussenden der Datenpakete (D) an die fahrzeugseitigen Datenempfangseinheiten (3) und gegebenenfalls eine Daten-Empfangseinheit (5) umfasst.
4. System nach einem der vorangehenden Ansprüche, dadurch gekennzeichnet, dass die Fahrzeuge (2) nebst den jeweiligen fahrzeugseitigen Datenempfangseinheiten (3) zusätzlich jeweils eine fahrzeugseitige Datensendeeinheit (6) aufweisen.
5. System nach einem der vorangehenden Ansprüche, dadurch gekennzeichnet, dass die Datenpakete (D) jeweils einen Nachrichtenkörper-Daten umfassenden Datenpaket-Nachrichtenkörper (N) und einen Header-Informationen umfassenden Datenpaket-Header (H) umfassen.
6. System nach dem vorangehenden Anspruch, dadurch gekennzeichnet, dass der Datenpaket-Header (H) einen oder mehrere Teil-Header (H1, H2, H3) aufweist, wobei ein Teil-Header (H1, H2, H3) als Header-Informationen administrative Informationen wie Adressinformationen, Sicherheitsinformationen, und/oder anderweitige Informationen umfasst.
7. System nach Anspruch 6, dadurch gekennzeichnet, dass die Sicherheitsinformationen Kodierungsinformationen, Authentifizierungsinformationen, Identifizierungsinformationen und/oder Signaturinformationen umfassen.
8. System nach einem der Ansprüche 5 bis 7, dadurch gekennzeichnet, dass der Datenpaket-Nachrichtenkörper (N) Informationen für einen autonomen Fahrbetrieb der Fahrzeuge (2) als Nachrichtenkörper-Daten umfasst.
9. System nach einem der Ansprüche 5 bis 8, dadurch gekennzeichnet, dass der Datenpaket-Nachrichtenkörper (N) Task-Anweisungen für die Fahrzeuge (2) als Nachrichtenkörper-Daten umfasst.
10.System nach Anspruch 5 bis 9, dadurch gekennzeichnet, dass der Datenpaket-Nachrichtenkörper (N) Karten-, Umgebungs- und/oder Verkehrsinformationen als Nachrichtenkörper-Daten umfasst.
11.System nach einem der vorangehenden Ansprüche, dadurch gekennzeichnet, dass der Datenpaket-Nachrichtenkörper (N) eine Zuordnungs-Kennung umfasst, die einem bestimmten Fahrzeug (2) der mehreren Fahrzeuge (2) zugeordnet ist, und die eine Zuordnung von Nachrichtenkörper-Daten in Bezug auf ein bestimmtes Fahrzeug (2) der mehreren Fahrzeuge (2) ermöglicht.
12.System nach einem der vorangehenden Ansprüche, dadurch gekennzeichnet, dass der Datenpaket-Nachrichtenkörper (N) einen oder mehrere Daten-Container (C) umfasst, wobei ein jeweiliger Daten-Container (C) einem bestimmten Fahrzeug (2) der mehreren Fahrzeuge (2) zugeordnet ist, und wobei ein einem bestimmten Fahrzeug (2) zugeordneter Daten-Container (C) die dem bestimmten Fahrzeug (2) zugeordnete Zuordnungs-Kennung und diesem Fahrzeug (2) zugeordnete Nachrichtenkörper-Daten umfasst.
13.System nach einem der vorangehenden Ansprüche, dadurch gekennzeichnet, dass die Datenübermittlungseinheit (2) dazu eingerichtet ist, im Wege der Broadcast-Übertragung ein Datenpaket (D) auszusenden und die fahrzeugseitigen Datenempfangseinheiten (3) dazu eingerichtet sind, das Datenpaket (D) zu empfangen und zu verarbeiten.
14.System nach einem der vorangehenden Ansprüche, dadurch gekennzeichnet, dass die fahrzeugseitigen Datensendeeinheiten (6) jeweils dazu eingerichtet sind, Antwort-Datenpakete (RD) an die Daten-Empfangseinheit (5) der Datenübermittlungseinheit (1) auszusenden, wobei die Antwort-Datenpakete (RD) jeweils einen Antwort-Nachrichtenkörper-Daten umfassenden Antwort-Datenpaket-Nachrichtenkörper (RN) und einen Antwort-Header-Informationen umfassenden Antwort-Datenpaket-Header (RH) umfassen, wobei der Antwort-Datenpaket-Header (RH) einen oder mehrere Antwort-Teil-Header (RH1, RH2, RH3) aufweist.
15.System nach einem der vorangehenden Ansprüche, dadurch gekennzeichnet, dass die Datenübermittlungseinheit (1) dazu eingerichtet ist, periodisch, insbesondere mit einer Periodizität von 50 ms, 100 ms, 150 ms, oder 200 ms, im Wege der Broadcast-Übertragung Datenpakete (D) an die fahrzeugseitigen Datenempfangseinheiten (3) der mehreren Fahrzeuge (2) auszusenden.
16.System nach einem der vorangehenden Ansprüche, dadurch gekennzeichnet, dass die fahrzeugseitigen Datensendeeinheiten (6) jeweils dazu eingerichtet sind, periodisch, insbesondere mit einer Periodizität von 50 ms, 100 ms, 150 ms oder 200 ms, Antwort-Datenpakete (RD) an die Datenübermittlungseinheit (1) auszusenden.
17.System nach einem der vorangehenden Ansprüche, dadurch gekennzeichnet, dass die Datenübermittlungseinheit (1) und eine fahrzeugseitige Datenkommunikationseinheit eines jeweiligen Fahrzeugs (2) dazu eingerichtet sind, unabhängig vom Aussenden der Datenpakete (D) im Wege der Broadcast-Übertragung, die Zuordnungs-Kennung über eine gesonderte Kommunikationsverbindung zu kommunizieren.
18.System nach einem der vorangehenden Ansprüche, dadurch gekennzeichnet, dass die Datenübermittlungseinheit (1) dazu eingerichtet ist, eine Notfallnachricht im Wege der Broadcast-Übertragung an die fahrzeugseitigen Datenempfangseinheiten (3) der mehreren Fahrzeuge (2) auszusenden, wobei in Folge des Empfangs einer solchen Notfallnachricht ein Notfall-Brems- und/oder Notfall-Fahrmanöver in einem bestimmten oder sämtlichen der mehreren Fahrzeuge (2) auslösbar ist.
19. Datenübermittlungseinheit (1) die zur Verwendung in einem System nach einem der Ansprüche 1 bis 18 eingerichtet ist.
20.Fahrzeug, umfassend eine fahrzeugseitige Datenempfangseinheit (3) sowie optional eine fahrzeugseitige Datensendeeinheit (6), wobei vorzugsweise die fahrzeugseitige Datenempfangseinheit (3) und die fahrzeugseitige Datensendeeinheit (6) eine fahrzeugseitige Datenkommunikationseinheit bilden, und wobei das Fahrzeug (2) zur Verwendung in einem System nach einem der Ansprüche 1 bis 18 eingerichtet ist.
21.Fahrzeugseitige Datenempfangseinheit (3), die zur Verwendung in einem System nach einem der Ansprüche 1 bis 18 eingerichtet ist.
22.Verfahren zum Übermitteln von Daten mittels Datenpaketen (D) von einer Datenübermittlungseinheit (1) an mehrere Fahrzeuge (2), umfassend: Aussenden eines Datenpakets (D) im Wege einer Broadcast-Übertragung an fahrzeugseitige Datenempfangseinheiten (3) der mehreren Fahrzeuge (2), Empfangen des Datenpakets (D) seitens der fahrzeugseitigen Datenempfangseinheiten (3), und Verarbeiten von in dem Datenpaket (D) enthaltenen Daten.
23.Verfahren nach Anspruch 22, wobei das Verfahren mit einem System nach einem der Ansprüche 1 bis 18 ausgeführt wird.

### Bezugszeichenliste

- 1: Datenübermittlungseinheit
- 2: Fahrzeug
- 3: fahrzeugseitige Datenempfangseinheit
- 4: Daten-Sendeeinheit (der Datenübermittlungseinheit)
- 5: Daten-Empfangseinheit (der Datenübermittlungseinheit)
- 6: fahrzeugseitige Datensendeeinheit
- D: Datenpaket
- C: Daten-Container
- RD: Antwort-Datenpaket
- RN: Antwort-Datenpaket-Nachrichtenkörper
- RH: Antwort-Datenpaket-Header
- N: Datenpaket-Nachrichtenkörper
- H: Datenpaket-Header
- H1: Teil-Header
- H2: Teil-Header
- H3: Teil-Header
- RH1: Antwort-Teil-Header
- RH2: Antwort-Teil-Header
- RH3: Antwort-Teil-Header

## Patentansprüche

1. System zum Übermitteln von Daten mittels Datenpaketen (D), umfassend eine Datenübermittlungseinheit (1) sowie mehrere Fahrzeuge (2), die Fahrzeuge (2) jeweils aufweisend eine fahrzeugseitige Datenempfangseinheit (3) zum Empfangen von seitens der Datenübermittlungseinheit (1) ausgesendeten Datenpaketen (D), **dadurch gekennzeichnet, dass** die Datenübermittlungseinheit (1) dazu eingerichtet ist, die Datenpakete (D) im Wege einer Broadcast-Übertragung an die fahrzeugseitigen Datenempfangseinheiten (3) der mehreren Fahrzeuge (2) auszusenden.

2. System nach Anspruch 1, **dadurch gekennzeichnet, dass** die Datenübermittlungseinheit (1) sowie die fahrzeugseitigen Datenempfangseinheiten (3) zur kabellosen Datenübermittlung eingerichtet sind.

3. System nach Anspruch 1 oder 2, **dadurch gekennzeichnet, dass** die Datenübermittlungseinheit (1) eine Daten-Sendeeinheit (4) zum Aussenden der Datenpakete (D) an die fahrzeugseitigen Datenempfangseinheiten (3) und gegebenenfalls eine Daten-Empfangseinheit (5) umfasst.

4. System nach einem der vorangehenden Ansprüche, **dadurch gekennzeichnet, dass** die Datenpakete (D) jeweils einen Nachrichtenkörper-Daten umfassenden Datenpaket-Nachrichtenkörper (N) und einen Header-Informationen umfassenden Datenpaket-Header (H) umfassen.

5. System nach dem vorangehenden Anspruch, **dadurch gekennzeichnet, dass** der Datenpaket-Header (H) einen oder mehrere Teil-Header (H1, H2, H3) aufweist, wobei ein Teil-Header (H1, H2, H3) als Header-Informationen administrative Informationen wie Adressinformationen, Sicherheitsinformationen, und/oder anderweitige Informationen umfasst, wobei die Sicherheitsinformationen insbesondere Kodierungsinformationen, Authentifizierungsinformationen, Identifizierungsinformationen und/oder Signaturinformationen umfassen.

6. System nach einem der Ansprüche 4 oder 5, **dadurch gekennzeichnet, dass** der Datenpaket-Nachrichtenkörper (N) als Nachrichtenkörper-Daten mindestens umfasst:
- Informationen für einen autonomen Fahrbetrieb der Fahrzeuge (2)
- Task-Anweisungen für die Fahrzeuge (2)
- Karten-, Umgebungs- und/oder Verkehrsinformationen oder
- eine Zuordnungs-Kennung, die einem bestimmten Fahrzeug (2) der mehreren Fahrzeuge (2) zugeordnet ist, und die eine Zuordnung von Nachrichtenkörper-Daten in Bezug auf ein bestimmtes Fahrzeug (2) der mehreren Fahrzeuge (2) ermöglicht

7. System nach einem der vorangehenden Ansprüche, **dadurch gekennzeichnet, dass** der Datenpaket-Nachrichtenkörper (N) einen oder mehrere Daten-Container (C) umfasst, wobei ein jeweiliger Daten-Container (C) einem bestimmten Fahrzeug (2) der mehreren Fahrzeuge (2) zugeordnet ist, und wobei ein einem bestimmten Fahrzeug (2) zugeordneter Daten-Container (C) die dem bestimmten Fahrzeug (2) zugeordnete Zuordnungs-Kennung und diesem Fahrzeug (2) zugeordnete Nachrichtenkörper-Daten umfasst.

8. System nach einem der vorangehenden Ansprüche, **dadurch gekennzeichnet, dass** die Datenübermittlungseinheit (2) dazu eingerichtet ist, im Wege der Broadcast-Übertragung ein Datenpaket (D) auszusenden und die fahrzeugseitigen Datenempfangseinheiten (3) dazu eingerichtet sind, das Datenpaket (D) zu empfangen und zu verarbeiten.

9. System nach einem der vorangehenden Ansprüche, **dadurch gekennzeichnet, dass** die fahrzeugseitigen Datensendeeinheiten (6) jeweils dazu eingerichtet sind, Antwort-Datenpakete (RD) an die Daten-Empfangseinheit (5) der Datenübermittlungseinheit (1) auszusenden, wobei die Antwort-Datenpakete (RD) jeweils einen Antwort-Nachrichtenkörper-Daten umfassenden Antwort-Datenpaket-Nachrichtenkörper (RN) und einen Antwort-Header-Informationen umfassenden Antwort-Datenpaket-Header (RH) umfassen, wobei der Antwort-Datenpaket-Header (RH) einen oder mehrere Antwort-Teil-Header (RH1, RH2, RH3) aufweist.

10. System nach einem der vorangehenden Ansprüche, **dadurch gekennzeichnet, dass** die Datenübermittlungseinheit (1) dazu eingerichtet ist, periodisch, insbesondere mit einer Periodizität von 50 ms, 100 ms, 150 ms, oder 200 ms, im Wege der Broadcast-Übertragung Datenpakete (D) an die fahrzeugseitigen Datenempfangseinheiten (3) der mehreren Fahrzeuge (2) auszusenden.

11. System nach einem der vorangehenden Ansprüche, **dadurch gekennzeichnet, dass** die Datenübermittlungseinheit (1) und eine fahrzeugseitige Datenkommunikationseinheit eines jeweiligen Fahrzeugs (2) dazu eingerichtet sind, unabhängig vom Aussenden der Datenpakete (D) im Wege der Broadcast-Übertragung, die Zuordnungs-Kennung über eine gesonderte Kommunikationsverbindung zu kommunizieren.

12. System nach einem der vorangehenden Ansprüche, **dadurch gekennzeichnet, dass** die Datenübermittlungseinheit (1) dazu eingerichtet ist, eine Notfallnachricht im Wege der Broadcast-Übertragung an die fahrzeugseitigen Datenempfangseinheiten (3) der mehreren Fahrzeuge (2) auszusenden, wobei in Folge des Empfangs einer solchen Notfallnachricht ein Notfall-Brems- und/oder Notfall-Fahrmanöver in einem bestimmten oder sämtlichen der mehreren Fahrzeuge (2) auslösbar ist.

13. Datenübermittlungseinheit (1) die zur Verwendung in einem System nach einem der Ansprüche 1 bis 12 eingerichtet ist.

14. Fahrzeug, umfassend eine fahrzeugseitige Datenempfangseinheit (3), die zur Verwendung in einem System nach einem der Ansprüche 1 bis 12 eingerichtet ist.

15. Verfahren zum Übermitteln von Daten mittels Datenpaketen (D) von einer Datenübermittlungseinheit (1) an mehrere Fahrzeuge (2), umfassend: Aussenden eines Datenpakets (D) im Wege einer Broadcast-Übertragung an fahrzeugseitige Datenempfangseinheiten (3) der mehreren Fahrzeuge (2), Empfangen des Datenpakets (D) seitens der fahrzeugseitigen Datenempfangseinheiten (3), und Verarbeiten von in dem Datenpaket (D) enthaltenen Daten.
